# EUROPEAN PATENT APPLICATION

(11) **EP 4 738 976 A1**
(43) Date of publication of application: **06.05.2026**
(21) Application number: 24849486.6
(22) Date of filing: 25.07.2024
(51) Int. Cl.: H04W 76/12, H04L 41/0894, H04L 67/51, H04L 41/0895, H04W 28/02, H04W 48/18

(54) **METHOD AND APPARATUS FOR CONTROLLING PDU SESSION IN WIRELESS COMMUNICATION SYSTEM**

(30) Priority: 28.07.2023 KR 20230098888
(71) Applicant: Samsung Electronics Co., Ltd., Suwon-si, Gyeonggi-do 16677 (KR)
(72) Inventor: BAEK, Youngkyo, Suwon-si Gyeonggi-do 16677 (KR); PARK, Jungshin, Suwon-si Gyeonggi-do 16677 (KR)
(74) Representative: Gulde & Partner
(86) International application number: PCT/KR2024/010837
(87) International publication number: WO 2025/028917

(57) **Abstract**

The present disclosure relates to a 5G or 6G communication system for supporting a higher data transmission rate. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology.

## Description

### [Technical Field]

The disclosure relates to a wireless communication system and, more particularly, to a method and an apparatus for controlling a PDU session so that a terminal connected to a femto base station in the wireless communication system receives a data service through a femto system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide an apparatus and a method capable of effectively providing services in a wireless communication system.

### [Solution to Problem]

Base on the discussion described above, a method for processing a control signal in a wireless communication system according to the disclosure may include receiving a first control signal transmitted from a base station, processing the received first control signal, and transmitting, to the base station, a second control signal generated based on the processing.

### [Advantageous Effects of Invention]

Embodiments set forth herein provide an apparatus and a method capable of effectively providing services in a mobile communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a wireless communication system considering a femto system according to an embodiment of the disclosure.
FIG. 2 illustrates a method for generating a PDU session through a femto system according to an embodiment of the disclosure.
FIG. 3 illustrates a method for generating a PDU session through a femto system according to an embodiment of the disclosure.
FIG. 4 illustrates a method for generating a PDU session through a femto system according to an embodiment of the disclosure.
FIG. 5 illustrates a method for generating a PDU session through a femto system according to an embodiment of the disclosure.
FIG. 6 illustrates a structure of a UE according to an embodiment of the disclosure.
FIG. 7 illustrates a structure of a base station according to an embodiment of the disclosure.
FIG. 8 illustrates a structure of a network entity according to an embodiment of the disclosure.

### [Mode for the Invention]

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. Various embodiments are provided to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in various embodiments of the disclosure, the term "unit" refers to a software element or a hardware element, and the "unit" performs certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In various embodiments of the disclosure, a user equipment (UE) may be referred to as a terminal, a mobile station (MS), a cellular phone, a smartphone, a computer, or various types of electronic devices capable of performing communication functions.

Furthermore, the embodiments of the disclosure as described below may also be applied to other communication systems having similar technical backgrounds or channel types to the embodiments of the disclosure. In addition, based on determinations by those skilled in the art, various embodiments of the disclosure may also be applied to other communication systems through some modifications without significantly departing from the scope of the disclosure.

In describing the embodiments of the disclosure in detail, a communication system may employ various wired or wireless communication systems, for example, may employ new RAN (NR) as a radio access network and packet core (5G system, 5G core network, or new generation core (NG Core)) as a core network, which are specified in the 5G communication standards defined by the 3GPP that is a wireless communication standardization group. In addition, based on determinations by those skilled in the art, the disclosure may be applied to other communication systems having similar backgrounds or channel types through some modifications without significantly departing from the scope of the disclosure.

The radio access network (RAN) may be installed in a macro network and may also be installed through a femto base station of a femto system. In the disclosure, a femto base station may be referred to as a femto next generation node B (gNB), F-gNB, a home gNB, H-gNB, a femto NG-RAN, or F-NG-RAN, and one of the terms mentioned above may be used interchangeably. In addition, a femto system may include only femto gNBs or may include user plane functions (UPFs) in addition to the femto gNBs. In the disclosure, a UPF constituting a femto system may be referred to as a local UPF or L-UPF, a femto UPF or F-UPF, and at least one of the above terms may be used interchangeably. Alternatively, the femto system may include a femto gNB and may also include a session management function (SMF) and UPFs. In the disclosure, the SMF that constitutes the femto system may be referred to as a local SMF (L-SMF), a femto SMF (F-SMF), or the like, and at least one of the above terms may be used interchangeably.

In the following description of various embodiments of the disclosure, terms for identifying access nodes, terms referring to network entities, terms referring to messages, terms referring to interfaces between network functions (NFs), terms referring to various identification information, and the like are illustratively used for the sake of descriptive convenience. Therefore, the disclosure is not limited by the terms as described below, and other terms referring to subjects having equivalent technical meanings may also be used.

In a 5G system, a network slice is supported, and traffic for different network slices may be processed by different protocol data unit (PDU) sessions. A PDU session may refer to an association between a data network providing a PDU connection service and a UE. The network slice may be understood as a technology which logically configures a network as a set of network fucntions (NFs) (or network entities) to support various services having different characteristics, such as broadband communication services, massive IoT, and mission-critical services such as V2X, and separates different network slices. Therefore, even when a communication failure occurs in a certain network slice, communication in other network slices is not affected, thereby and thus a stable communication service can be provided. In various embodiment sof the disclosure, the term "slice" may be interchangeably used with the term "network slice". In such a network environment, a UE may be connected to a plurlaity of network slices when provided with various services. The NF may be a software instance running on hardware, and may be implemented as a network element or a virtualized function instantiated on a suitable platform. Obviously, the above example is not limiting, and the NF may be configured by independent hardware and may be configired by a combiantion of software and hardware.

A mobile communication service provider may configure the network slice and allocate a network resource suitable for a specific service for each network slice or for each set of network slices. A network resource may refer to an NF, a logical resource provided by an NF, a raio resource allocated by a base station, or the like.

For example, a mobile communication service provider may configure network slice A to provide mobile broadband services, configure network slice B to provide vehicular communication services, and configure network slice C to provide extended reality (XR) services to be described later. That is, in this way, the 5G network may efficiently provide a corresponding service to a UE through a specialized network slice tailored to the characteristics of each service. In the 5G system, a network slice may be represented as single-network slice selection assistance information (S-NSSAI). The S-NSSAI may include a slice/service type (SST) value and a slice differentiator (SD) value. The SST may indicate the characteristics of a service supported by the network slice (for example, enhanced mobile broadband (eMBB), IoT, ultra-reliable low latency communication (URLLC), V2X, an XR service, etc.). The SD may be a value used as an additional identifier for a specific service referred to as an SST.

Hereinafter, various embodiments of the disclosure will be described with reference to the drawings.

According to the disclosure, when services are provided by installing a femto base station in a wireless communication system, a femto system including a femto base station, a local SMF, or a local UPF may be configured. The femto system is a system for using 5G communication services in a localized area such as a house or a single floor of a building, and a communication service provider may not directly install a base station. For example, a consumer may purchase and install a femto system to receive high-quality 5G communication services through the femto system. Particularly, when a service is provided to a UE connected to the femto system by being connected to a local data network of the femto system, traffic of a macro network may be locally offloaded, thereby providing effects of traffic distribution and saving radio resources.

The disclosure proposes a method in which a UE connected to a radio access network through a femto base station receives a 5G communication service through a local data network.

According to various embodiments of the disclosure, when receiving a communication service through a femto base station and a femto system in a wireless communication system, a local data network may be used so that traffic of a macro network may be offloaded and radio resources of a macro base station may be saved.

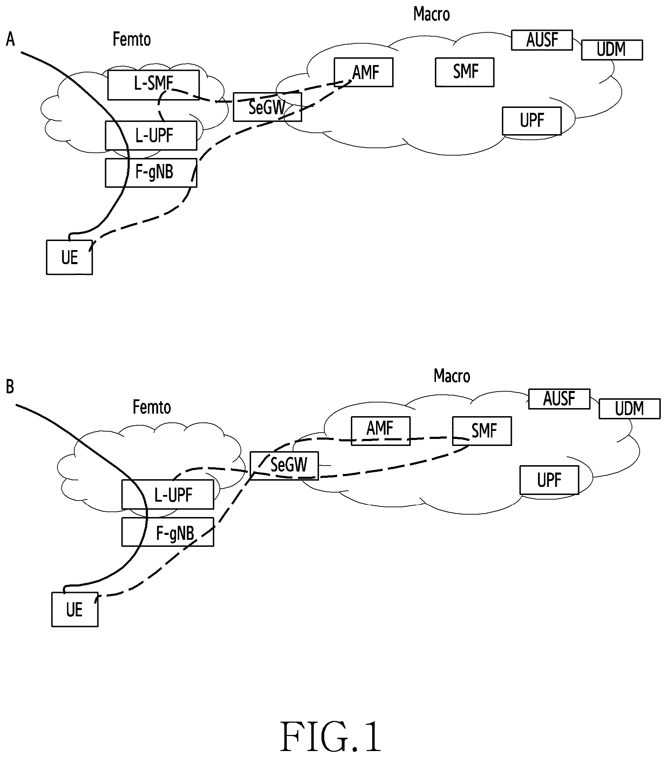

FIG. 1 illustrates a structure of a wireless communication system considering a femto system according to an embodiment of the disclosure.

Referring to "A" in FIG. 1, a femto system may, in addition to a F-gNB, include an L-SMF and an L-UPF. A security gateway may be positioned between the femto system and a macro system, and the security gateway may maintain security of communication between the femto system and the macro system. In this case, for a protocol data unit (PDU) session that connects to a local data network through the femto system, the local SMF (L-SMF) may be selected as a serving SMF, and the L-UPF may be selected as a PDU session anchor (PSA) UPF, so that the PDU session may be established.

Therefore, according to "A" of FIG. 1, a data transmission path may be implemented in which data is transmitted from a UE to a local data network through a femto base station (or F-gNB or Femto next generation-radio access network (NG-RAN)) and a local user plane function (L-UPF).

Referring to "B" of FIG. 1, a femto system may include an F-gNB and an L-UPF, and a security gateway may be located between the femto system and the macro system so that the security gateway may maintain security for communications between the femto system and the macro system. In this case, for a PDU session that accesses a local data network through the femto system, the SMF of the macro system may be selected as the serving SMF, and L-UPF may be selected as the PSA UPF so that the PDU session can be established.

Therefore, according to "B" of FIG. 1, a data transmission path in which data is transmitted to a local data network through a femto base station (or F-gNB or femto next generation radio access network (NG-RAN)) and an L-UPF from the UE may be implemented.

In various embodiments of the disclosure, network technologies used may refer to standard specifications defined by the international telecommunication union (ITU) or 3GPP (for example, TS 23.501, TS 23.502, TS 23.503, etc.). The components included in the network structure of FIG. 1 ("A" and "B" of FIG. 1) may each refer to a physical entity or may refer to software that performs an individual function, or hardware combined with software. Hereinafter, the components included in the network structure of FIG. 1 will be referred to as NFs.

Interfaces known in the 5G core network (5GC) may be used between the NFs. A related description may be referenced to standard specifications (TS 23.501), and a specific description will be omitted.

The macro system or femto system of FIG. 1 may include an NG-RAN and a 5GC. The NG-RAN may be a base station (e.g., gNB, integrated access and backhaul (IAB), etc.) that supports a radio access technology in a 5G system.

In FIG. 1, the 5GC may include network entities such as an access and mobility management function (AMF), a session management function (SMF), an authentication server function (AUSF), a user plane function (UPF), a policy control function (PCF), and a unified data management (UDM). Of course, the example is not limiting, and the 5GC may include more or fewer entities than those illustrated in FIG. 1.

According to an embodiment of the disclosure, the AMF may be an entity for managing access and mobility of a UE. The AMF may serve as a UE-core network endpoint through which the UE connects to other entities of the 5GC of the macro system or the femto system via the F-gNB. For example, the AMF may perform network functions such as registration, connection, reachability, mobility management, access verification, authentication, and generation of mobility events for the UE. It should be understood that the examples are not limited thereto.

According to an embodiment of the disclosure, the SMF may perform a management function for a protocol data unit (PDU) session of the UE. For example, the SMF may perform network functions such as establishing, modifying, and releasing sessions, session management through maintaining tunnels between a UPF and an NG-RAN as needed for the sessions, allocating and managing Internet protocol (IP) addresses for the UE, selecting and controlling a user plane, controlling traffic processing in the UPF, and controlling the collection of charging data. It should be understood that the examples are not limited thereto.

According to an embodiment of the disclosure, the UPF may perform a function of processing user data of the UE. For example, the UPF may perform network functions such as performing a role of an anchor between radio access technologies (RATs), providing a connection to a PDU session and an AF/AS, packet routing and forwarding, packet inspection, applying a user plane policy, generating a traffic usage report, and buffering. It should be understood that the examples are not limited thereto.

According to an embodiment of the disclosure, the UDM may perform functions such as generation of authentication information for 3GPP security, processing of user identifiers (IDs), list management of NFs supporting the UE, and subscription information management. The unified data repository (UDR) may perform functions of storing and providing subscription information managed by the UDM, structured data for exposure, and application data associated with the network exposure function (NEF) or a service. It should be understood that the examples are not limited thereto.

According to an embodiment of the disclosure, the PCF may manage operator policy information for providing a service in a 5G system. The UDR may store subscription information of the UE and provide the stored subscription information to the UDM. In addition, the UDR may store operator policy information and provide the stored operator policy information to the PCF. It should be understood that the examples are not limited thereto.

According to an embodiment of the disclosure, the NEF may perform a function of delivering or receiving, to or from the outside, events occurring in a 5G system and capabilities supported thereby. For example, the NEF may perform a function of securely providing information of the AF/AS to the 5GC, a function of converting internal/external information, and a function of storing information received from another NF in the UDR and then redistributing the stored information. It should be understood that the examples are not limited thereto.

According to an embodiment of the disclosure, the AUSF may process and store data for UE authentication. It should be understood that the examples are not limited thereto.

According to an embodiment of the disclosure, the UE may access an NG-RAN and register in a 5G system. For example, the UE may access the NG-RAN and perform a registration procedure with the AMF. During a registration procedure, the AMF may determine a network slice available to a UE connected to the NG-RAN, and may allocate the network slice to the UE. The UE may select a network slice and configure a PDU session for communication with an application function (AF)/application server (AS). A single PDU session may include one or multiple QoS flows, and each QoS flow may provide different transmission performances required for each application service by having different QoS parameters configured therefor.

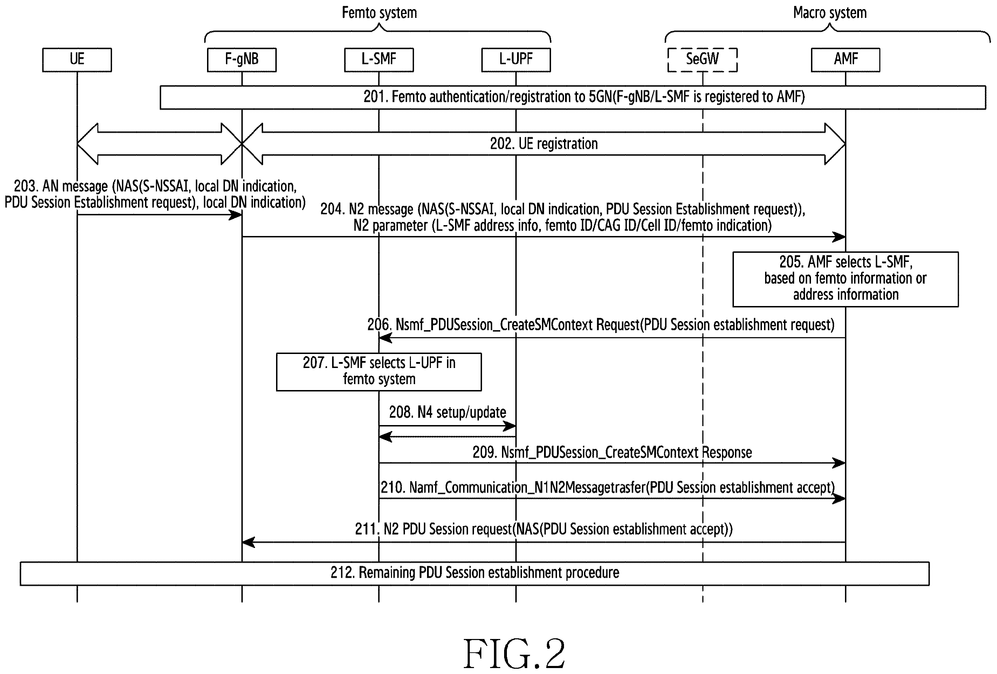

FIG. 2 illustrates a method of generating a PDU session through a femto system according to an embodiment of the disclosure. Referring to FIG. 2, an embodiment in which a UE receives service from a local data network by using a PDU session established through a femto system including an F-gNB, an L-SMF, and an L-UPF is illustrated.

Referring to FIG. 2, when a femto system is installed, the femto system may, as in operation 201, connect to a macro system (macro network) and authenticate the femto system, and register entities of the femto system in the macro system so that the entities of the femto system and the entities of the macro system can interwork with each other to perform operations for providing a service. For authentication and security between the femto system and the macro system, transactions between the femto system and the macro system may be performed through a security GW (SeGW) of the macro network. In particular, an F-gNB and an L-SMF may be registered in an AMF of the macro system so as to be identified by the AMF. Through the registration, the AMF may acquire information such as address information of the F-gNB and the L-SMF, a cell ID of the F-gNB, a femto ID, or a femto indication indicating that the gNB is a femto base station.

After the femto system is registered in the macro system, the UE may perform registration to the communication network through the F-gNB as in operation 202.

In addition, if the UE desires to receive a service from a local data network through the femto system, the UE may trigger a PDU session establishment request process. For example, when transmitting an MM-NAS message including a PDU session establishment request message to the AMF as in operation 203, the MM-NAS message may include a single network slice selection assistance information (S-NSSAI) configured for accessing a local data network access, or a local data network indication (such as local DN indication) indicating an intention that the UE intends to access a local data network, thereby enabling the AMF to identify the intention of the UE. Alternatively, when the UE sends the MM-NAS message to the F-gNB through the AN message, the UE may also transmit a local DN indication, which is an indication that the UE desires to access a local data network. That is, the UE may transmit an AN message including both the MM-NAS message and the local DN indication so that the F-gNB may identify the intention of the UE.

The F-gNB having received the AN message may transmit, to the AMF, an N2 message including the received MM-NAS message and an N2 parameter, as in operation 204. The N2 parameter may include information on the F-gNB to which the UE is connected. For example, the N2 parameter may include all or some of the following information including an ID (femto ID) of the femto system to which the F-gNB belongs, a cell ID of the F-gNB, a CAG ID allowed by the F-gNB, or a femto indication indicating that the gNB is a femto base station. In addition, in case that a local DN indication is transferred to the F-gNB via the AN message in operation 203, the F-gNB may transmit an N2 parameter including the fully qualified domain name (FQDN) of the L-SMF or an IP address and port information of the L-SMF as the address information of the L-SMF, or including the local DN indication.

Meanwhile, the AMF having received the N2 message may, as in operation 205, identify (or recognize) that the MM-NAS message is intended to establish a PDU session to provide a service through a local data network in the femto system when the AMF receives a local DN indication from the received MM-NAS message, or receives, as the N2 parameter, the local DN indication or receives the address information of the L-SMF. The AMF may select an L-SMF in the femto system. That is, the AMF may obtain information of the F-gNB to which the UE is connected from the information of the N2 parameter of operation 204, and may obtain the address information of the L-SMF in the femto system. Alternatively, the AMF may obtain information such as the cell ID or femto ID of the F-gNB to which the UE is connected, from the N2 parameter information of operation 204, and may obtain the address information of the L-SMF corresponding to the femto system in which the F-gNB is located, obtained in operation 201. The address information of the L-SMF may include an FQDN, an IP address, and port information of the L-SMF. It should be understood that the example is not limited thereto.

Therefore, as in operation 206, the AMF may transmit, to the selected L-SMF, the PDU session establishment request message that has been included in and delivered through the MM-NAS message. Further, in operation 207, the L-SMF may select an L-UPF in the femto system to which the L-SMF belongs. The L-SMF, the femto system, and the macro system may perform the remaining PDU session establishment procedure, such as a PDU session establishment accept message, as in operations 208 to 212, to generate a PDU session through which a service may be received via the local data network (DN).

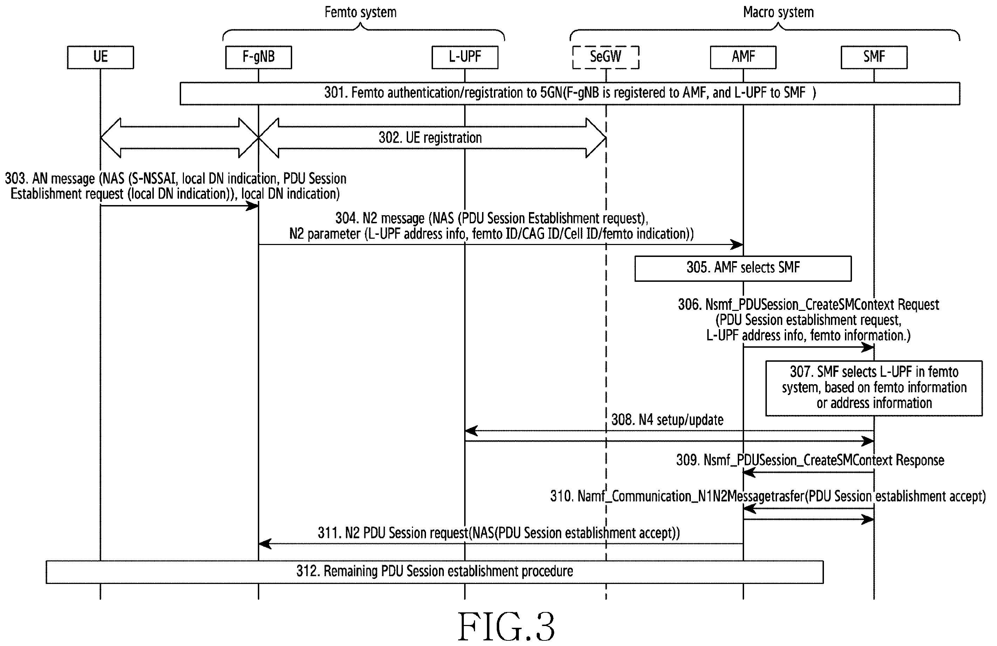

FIG. 3 illustrates a method for generating a PDU session through a femto system according to an embodiment of the disclosure. Referring to FIG. 3, an embodiment is illustrated in which a UE receives a service from a local data network by using a PDU session established through a femto system configured by an F-gNB and an L-UPF.

Referring to FIG. 3, when a femto system is installed, as in operation 301, the femto system may connect to the macro system (macro network) to authenticate the femto system and register entities of the femto system with the macro system so that the entities of the femto system and the entities of the macro system can interwork with each other and perform operations for providing a service. For authentication and security between the femto system and the macro system, transactions between the femto system and the macro system may be performed through a security GW (SeGW) of the macro network. In particular, the F-gNB may be registered so as to be identified by the AMF of the macro system. The L-UPF may be registered so as to be identified by the SMF. Through the registration, the AMF may acquire information such as an F-gNB address, an F-gNB cell ID, a femto ID, or a femto indication indicating that the gNB is a femto base station. The SMF may also acquire information such as an L-UPF address, an F-gNB address, an F-gNB cell ID, a femto ID, or a femto indication indicating that the gNB is a femto base station.

After the femto system is registered in the macro system, the UE may perform registration (registration) in the communication network through the F-gNB, as in operation 302.

Meanwhile, when the UE desires to receive a service from a local data network through the femto system, the UE may trigger a PDU session establishment request procedure. For example, as in operation 303, the UE may transmit a PDU session establishment request message including at least one of an S-NSSAI configured for a local data network access and an indication, such as local DN indication, indicating that the UE desires to access a local data network. Alternatively, when transmitting an MM-NAS message including a PDU session establishment request message to the AMF, the UE may enable the AMF to identify the intention of the UE by transmitting an MM-NAS message including an S-NSSAI configured for a local data network access, or including an indication, such as local DN indication, indicating that the UE desires to access a local data network. Alternatively, when the UE sends the MM-NAS message to the F-gNB via the AN message, the UE may transmit a local DN indication indicating that the UE desires to access a local data network. That is, the UE may enable the F-gNB to identify the intention of the UE by transmitting the AN message including both the MM-NAS message and the local DN indication.

The F-gNB having received the AN message may transmit an N2 message including the received MM-NAS message and including an N2 parameter to the AMF, as in operation 304. The N2 parameter may include information on the F-gNB to which the UE is connected. For example, the N2 parameter may include all or some of the following information including an ID of the femto system to which the F-gNB belongs, a cell ID of the F-gNB, a CAG ID allowed by the F-gNB, or a femto indication indicating that the gNB is a femto base station. In addition, in case that a local DN indication is delivered to the F-gNB through the AN message in operation 303, the F-gNB may transmit an N2 parameter including an FQDN, IP address, and port information of the L-UPF as address information of the L-UPF, or including a local DN indication.

Upon receiving the N2 message, the AMF may select an SMF in the macro system, as in operation 305. The AMF may transmit, to the selected SMF, an Nsmf_PDUSession_CreateSMContext Request message including the PDU session establishment request message that has been included in and delivered through the MM-NAS message, as in operation 306. In case that the MM-NAS message includes a local DN indication, or that the N2 parameter includes a local DN indication, the Nsmf_PDUSession_CreateSMContext Request message may include the local DN indication. In addition, when the N2 parameter includes the address information of the L-UPF, the address information of the L-UPF may be included in the Nsmf_PDUSession_CreateSMContext Request message.

In addition, when the N2 parameter includes information of the F-gNB to which the UE is connected, the Nsmf_PDUSession_CreateSMContext Request message may include the information of the F-gNB. The information of the F-gNB may include some or all of the following information including an ID of the femto system to which the F-gNB belongs, a cell ID of the F-gNB, a CAG ID allowed by the F-gNB, or a femto indication indicating that the gNB is a femto base station.

In operation 307, the SMF having received the Nsmf_PDUSession_CreateSMContext Request message may identify that the UE is to use a local data network via the femto system, based on the included local DN indication or the L-UPF address information. Therefore, the SMF may select the L-UPF in the femto system to which the UE is connected. Information on the femto system to which the UE is connected may include information on the F-gNB included in the N2 parameter or address information of the L-UPF.

Therefore, as in operation 308, the SMF may establish a user plane together with the L-UPF through an N4 message, and the SMF, the femto system, and the macro system may perform the remaining PDU session establishment procedures, such as a PDU session establishment accept message, as in operations 309 to 312, to generate a PDU session through which a service may be received through a local data network (DN).

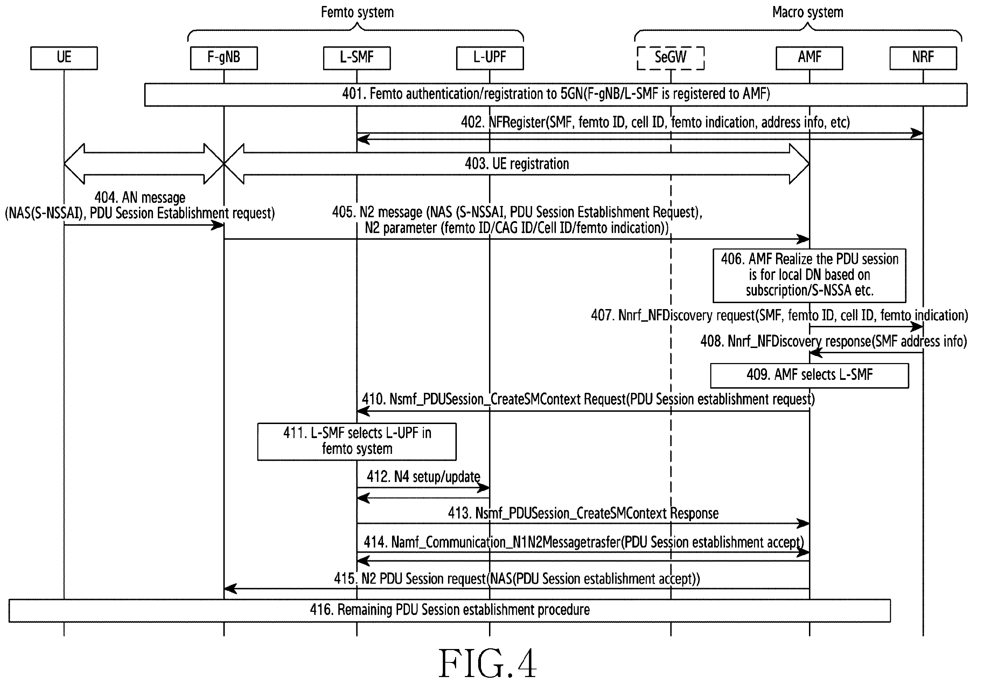

FIG. 4 illustrates a method for generating a PDU session through a femto system according to an embodiment of the disclosure. Referring to FIG. 4, an embodiment in which a UE receives a service from a local data network by using a PDU session established through a femto system including an F-gNB, an L-SMF, and an L-UPF is illustrated.

Referring to FIG. 4, when a femto system is installed, as in operation 401, the femto system may connect to a macro system, authenticate the femto system, and register entities of the femto system with the macro system so that the entities of the femto system and the entities of the macro system can interwork with each other to perform operations for providing a service. For authentication and security between the femto system and the macro system, transactions between the femto system and the macro system may be performed through a security gateway (SeGW) of the macro network. In particular, the F-gNB may be registered so as to be identifiable by the AMF of the macro system. Through the registration, the AMF may obtain information such as address information of the F-gNB, a cell ID of the F-gNB, a femto ID, or a femto indication indicating that the gNB is a femto base station.

In addition, the L-SMF of the femto system may be registered with the NRF of the macro system, and an entity of the macro system may find the L-SMF of the femto system as needed. For example, as in operation 402, the L-SMF may transmit an NFRegister message to the NRF of the macro system. Through this, the L-SMF may register information on the femto system while notifying that the L-SMF is an SMF.

In addition, according to an embodiment, the NFRegister message may include an ID of a femto system to which the L-SMF belongs, a cell ID of the F-gNB, a femto indication indicating that the femto system is a femto system, a dedicated S-NSSAI used for the femto system, and address information of the L-SMF. The NRF may store the above-described information (e.g., information on the femto system) in an NF profile and may respond when another entity, such as an AMF, later attempts to find the L-SMF of the femto system.

After the femto system is registered with the macro network, the UE may perform registration with the communication network through the F-gNB, as in operation 403.

Accordingly, when a UE desires to receive a service through the femto system, a PDU session establishment request procedure may be triggered. For example, as in operation 404, a PDU session establishment request message may be transmitted. In this case, as in FIG. 2 described above, when transmitting an MM-NAS message including the PDU session establishment request message to the AMF, the MM-NAS message may include an S-NSSAI configured for local data network access or may include an indication indicating that the UE desires to access a local data network, such as a local DN indication, thereby enabling the AMF to identify the intention of the UE. When transmitting the MM-NAS message to the F-gNB through the AN message, the UE may transmit, together with the AN message, a local DN indication indicating that the UE desires to access a local data network. That is, by transmitting the AN message including both the MM-NAS message and the local DN indication, the UE allows the F-gNB to identify the intention of the UE.

As in operation 405, the F-gNB having received the AN message may transmit, to the AMF, an N2 message including the received MM-NAS message and an N2 parameter. The N2 parameter may include information of the F-gNB to which the UE is connected. For example, the N2 parameter may include some or all of the following information including an ID (femto ID) of a femto system to which the F-gNB belongs, a cell ID of the F-gNB, a CAG ID allowed by the F-gNB, or a femto indication indicating that the gNB is a femto base station. In addition, when the local DN indication is delivered to the F-gNB through the AN message in operation 403, the F-gNB may include the local DN indication in the N2 parameter, thereby delivering the intention of the UE to the AMF.

However, instead of the UE directly sending an indication for accessing a local data network, subscriber information of the UE for allowing access to the local data network of the femto system for a specific S-NSSAI and DNN may be stored in subscription data maintained by a UDM. Subsequently, through UE registration of operation 403, the AMF may obtain, from the UDM, subscriber information indicating that the specific S-NSSAI and DNN are configured to access the local data network of the femto system.

Meanwhile, the AMF having received the N2 message may, as in operation 406, recognize (or identify) that the MM-NAS message is intended to establish a PDU session for providing a service through the local data network in the femto system, when a local DN indication is received from the MM-NAS message, or when a local DN indication is received as an N2 parameter, or when S-NSSAI or DNN information delivered from the UE as subscriber information indicates that the local data network is to be used.

The AMF may transmit an Nnrf_NFDiscovery request message to the NRF, as in operation 407, in order to acquire information of an SMF in the femto system. The Nnrf_NFDiscovery request message may include information on the SMF to be discovered, and may include, in order to indicate the femto system or the F-gNB to which the UE is connected, some or all of information such as a femto ID, a cell ID of the F-gNB, or a femto indication, obtained from the N2 parameter. Upon receiving the request, the NRF may notify the AMF of address information of the L-SMF in the femto system to which the UE is connected, as in operation 408.

The address information of the L-SMF may include an FQDN, an IP address, and port information of the L-SMF. It should be understood that the examples are not limited thereto.

Therefore, as in operation 409, the AMF may select the L-SMF. The AMF may transmit, to the selected L-SMF, the PDU session establishment request message having been included in the MM-NAS message and delivered, as in operation 410. Further, in operation 411, the L-SMF may select an L-UPF in the femto system to which the L-SMF belongs. The L-SMF, the femto system, and the macro system may perform remaining PDU session establishment procedures, such as a PDU session establishment accept message, as in operations 412 to 416, to generate a PDU session through which a service may be received via the local data network.

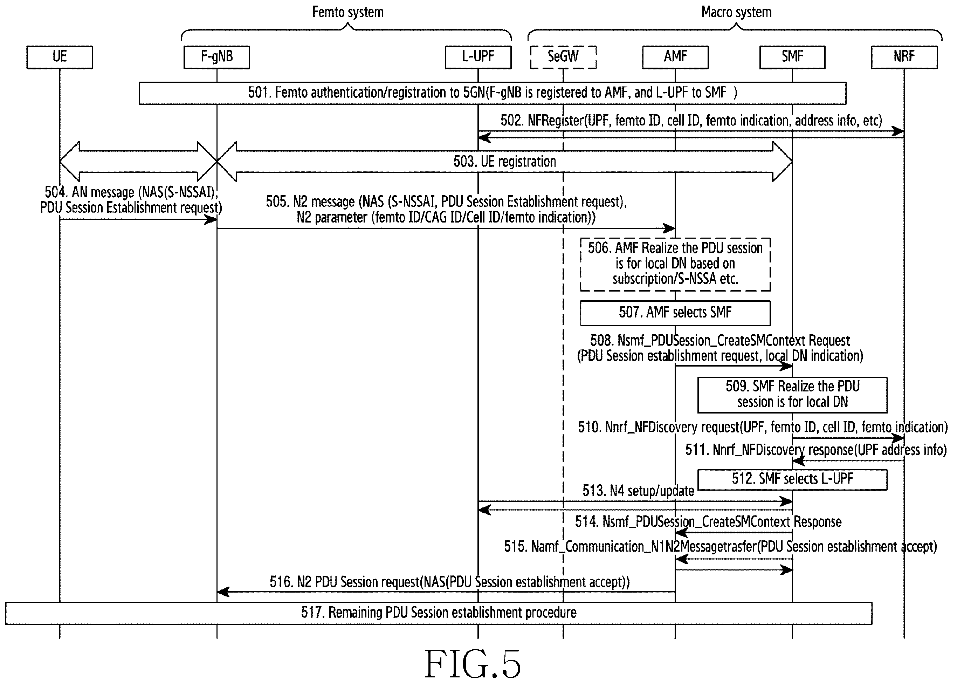

FIG. 5 illustrates a method for establishing a PDU session through a femto system according to an embodiment of the disclosure. Referring to FIG. 5, an embodiment is illustrated in which a service is provided from a local data network by using a PDU session established through a femto system including an F-gNB and an L-UPF.

Referring to FIG. 5, first, when the femto system is installed, as in operation 501, the femto system may connect to a macro system, authenticate the femto system, and register the entities of the femto system to the macro system so that the entities of the femto system and the entities of the macro system can interwork and perform operations for service provision. To perform authentication and security between the femto system and the macro system, transactions between the femto system and the macro system may be performed through a security GW (SeGW) of the macro network. Particularly, an F-gNB may be registered so as to be identifiable by the AMF of the macro system. Through the registration, the AMF may acquire information such as address information of the F-gNB, a cell ID of the F-gNB, a femto ID, or a femto indication indicating that the gNB is a femto base station.

Further, the L-UPF of the femto system may be registered with the NRF of the macro system, and an entity of the macro system may find the L-UPF of the femto system as needed. For example, as in operation 502, the L-UPF may transmit an NFRegister message to the NRF of the macro system. Through this, the L-UPF may register information on the femto system while notifying that the L-UPF is a UPF.

Further, according to an embodiment, the NFRegister message may include an ID of the femto system to which the L-UPF belongs, a cell ID of the F-gNB, a femto indication indicating that the femto system is a femto system, a dedicated S-NSSAI used for the femto system, or address information of the L-UPF. The NRF may store the above information (for example, information regarding the femto system) in an NF profile and respond when another entity such as an AMF attempts to find the L-UPF of the femto system later.

After the femto system is registered in the macro network, the UE may perform registration through the F-gNB, as in operation 503.

Meanwhile, when the UE desires to receive a service from the local data network through the femto system, the UE may trigger a PDU session establishment request procedure. For example, as in operation 504, the UE may transmit a PDU session establishment request message including an S-NSSAI configured for accessing the local data network and an indication, such as a local DN indication, indicating that the UE intends to access the local data network. Alternatively, when the UE transmits, to the AMF, an MM-NAS message including the PDU session establishment request message, the UE may include an S-NSSAI configured for accessing the local data network or may transmit an MM-NAS message including an indication such as a local DN indication indicating that the UE intends to access the local data network, thereby enabling the AMF to identify the intention of the UE. Alternatively, when transmitting the MM-NAS message to the F-gNB through the AN message, the UE may transmit a local DN indication indicating that the UE intends to access the local data network. That is, by transmitting the AN message including both the MM-NAS message and the local DN indication, the UE enables the F-gNB to identify the intention of the UE.

However, instead of the UE directly sending an indication for accessing a local data network, subscriber information of the UE for allowing access to the local data network of the femto system for a specific S-NSSAI and DNN may be stored in subscription data maintained by a UDM. Subsequently, through UE registration of operation 503, the AMF may obtain, from the UDM, subscriber information indicating that the specific S-NSSAI and the DNN are configured to access the local data network of the femto system.

The F-gNB having received the AN message may, as in operation 505, transmit, to the AMF, an N2 message including the received MM-NAS message and an N2 parameter. The N2 parameter may include information of the F-gNB to which the UE is connected. For example, the N2 parameter may include all or some of the following information including an ID of the femto system to which the F-gNB belongs, a cell ID of the F-gNB, a CAG ID allowed by the F-gNB, or a femto indication indicating that the gNB is a femto base station. In addition, when a local DN indication has been delivered to the F-gNB through the AN message in operation 504, the F-gNB may transmit the N2 parameter including the local DN indication.

Meanwhile, the AMF having received the N2 message may, as in operation 506, identify (or recognize) that the MM-NAS message is attempting to establish a PDU session for providing a service through a local data network in the femto system when the local DN indication is received from the MM-NAS message, or the local DN indication is received as the N2 parameter, or when the S-NSSAI or DNN information delivered from the UE as subscriber information is configured to use a local data network.

According to an embodiment of the disclosure, the AMF may select an SMF in the macro system, as in operation 507. As in operation 508, the AMF may transmit, to the selected SMF, an Nsmf_PDUSession_CreateSMContext Request message including the PDU session establishment request message that has been included in the MM-NAS message and delivered. In addition, when the AMF recognizes, in operation 506, that the MM-NAS message is intended to establish a PDU session for providing a service through a local data network in the femto system, the AMF may include a local DN indication in the Nsmf_PDUSession_CreateSMContext Request message. Further, when the N2 parameter includes information of the F-gNB to which the UE is connected, the Nsmf_PDUSession_CreateSMContext Request message may include the information of the F-gNB. The information of the F-gNB may include some or all of the following information including an ID of the femto system to which the F-gNB belongs, a cell ID of the F-gNB, a CAG ID allowed by the F-gNB, or a femto indication indicating that the gNB is a femto base station.

In operation 509, the SMF having received the Nsmf_PDUSession_CreateSMContext Request message may identify that the UE intends to use a local data network through the femto system, based on the included local DN indication or the local DN indication included in the PDU session establishment request message. Accordingly, the SMF may find an L-UPF in the femto system to which the UE is connected.

To obtain information on the UPF in the femto system, the SMF may transmit an Nnrf_NFDiscovery Request message to the NRF, as in operation 510. The Nnrf_NFDiscovery Request message may include information on the UPF, which is an entity to be found, and may include some or all of the following information including the femto ID, the cell ID of the F-gNB, or a femto indication, which are obtained through operation 508, in order to represent the femto system or the F-gNB to which the UE is connected. The NRF having received the request may inform the SMF of the address information of the L-UPF in the femto system to which the UE is connected, as in operation 511.

The address information of the L-UPF may include an FQDN, an IP address, and port information of the L-UPF. It should be understood that the examples are not limited thereto.

In operation 512, the SMF may select the found L-UPF, and thereafter, as in operation 513, the SMF may establish a user plane together with the L-UPF through an N4 message, and may perform the remaining PDU session establishment procedures, such as a PDU session establishment accept message, as in operations 514 to 517, thereby generating a PDU session through which a service may be received via the local DN.

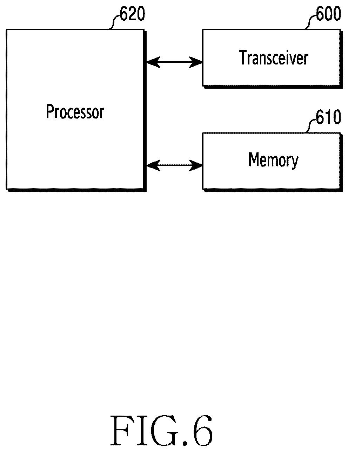

FIG. 6 is a block diagram illustrating a structure of a UE according to an embodiment of the disclosure.

As illustrated in FIG. 6, the UE of the disclosure may include a processor 620, a transceiver 600, and a memory 630. However, components of the UE are not limited to the above-described example. For example, the UE may include a larger or smaller number of components than the above-described components. In addition, the processor 620, the transceiver 600, and the memory 610 may be implemented in the form of a single chip.

According to an embodiment of the disclosure, the processor 620 may control a series of processes so that the UE can operate according to the above-described embodiments of the disclosure. For example, the processor 620 may control the components of the UE in order to perform the methods for providing broadcast services according to the above-described embodiments. The processor 620 may control the components of the UE to perform the embodiments of the disclosure by executing the programs stored in the memory 610. In addition, the processor 620 may be an application processor (AP), a communication processor (CP), a circuit, an application-specific circuit, or at least one processor.

According to an embodiment of the disclosure, the transceiver 600 may transmit/receive signals with network entities, other UEs, or base stations. The signals transmitted/received with network entities, other UEs, or base stations may include control information and data. The transceiver 600 may include an RF transmitter configured to up-convert and amplify the frequency of transmitted signals, an RF receiver configured to low-noise-amplify received signals and down-convert the frequency thereof, and the like. However, this is only an embodiment of the transceiver 600, and the components of the transceiver 600 are not limited to the RF transmitter and the RF receiver. In addition, the transceiver 600 may receive signals through a radio channel, output the same to the processor 620, and transmit signals output from the processor 620 through the radio channel.

According to an embodiment of the disclosure, the memory 610 may store programs and data necessary for operations of the UE. In addition, the memory 610 may store control information or data included in signals transmitted/received by the UE. The memory 610 may include storage media such as a ROM, a RAM, a hard disk, a CD-ROM, and a DVD, or a combination of storage media. In addition, the memory 610 may include multiple memories. Furthermore, according to an embodiment, the memory 610 may store programs for executing the above-described methods for providing broadcast services.

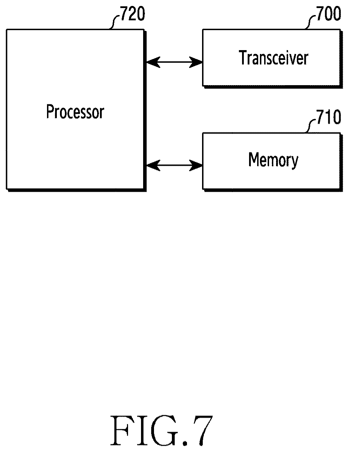

FIG. 7 is a block diagram illustrating a structure of a base station according to an embodiment of the disclosure.

As illustrated in FIG. 7, the base station of the disclosure may include a processor 720, a transceiver 700, and a memory 710. However, components of the base station are not limited to the above-described example. For example, the base station may include a larger or smaller number of components than the above-described components. In addition, the processor 720, the transceiver 700, and the memory 710 may be implemented in the form of a single chip.

According to an embodiment of the disclosure, the processor 720 may control a series of processes so that the base station can operate according to the above-described embodiments of the disclosure. For example, the processor 720 may control the components of the base station in order to provide broadcast services according to the above-described embodiments. The processor 720 may control the components of the base station to perform the embodiments of the disclosure by executing the programs stored in the memory 710. In addition, the processor 720 may be an application processor (AP), a communication processor (CP), a circuit, an application-specific circuit, or at least one processor.

According to an embodiment of the disclosure, the transceiver 700 may transmit/receive signals with network entities, other base stations, or UEs. The signals transmitted/received with network entities, other base stations, or UEs may include control information and data. The transceiver 700 may include an RF transmitter configured to up-convert and amplify the frequency of transmitted signals, an RF receiver configured to low-noise-amplify received signals and down-convert the frequency thereof, and the like. However, this is only an embodiment of the transceiver 700, and the components of the transceiver 700 are not limited to the RF transmitter and the RF receiver. In addition, the transceiver 700 may receive signals through a radio channel, output the same to the processor 720, and transmit signals output from the processor 720 through the radio channel.

According to an embodiment of the disclosure, the memory 710 may store programs and data necessary for operations of the base station. In addition, the memory 710 may store control information or data included in signals transmitted/received by the base station. The memory 710 may include storage media such as a ROM, a RAM, a hard disk, a CD-ROM, and a DVD, or a combination of storage media. In addition, the memory 710 may include multiple memories. Furthermore, according to an embodiment, the memory 710 may store programs for executing the above-described methods for providing broadcast services.

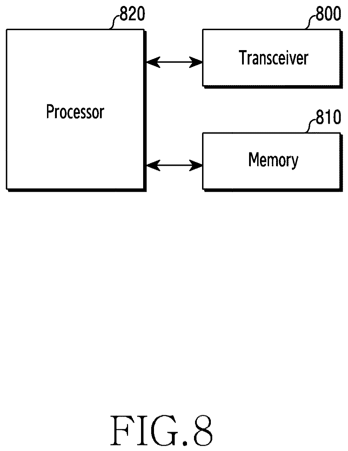

FIG. 8 is a block diagram illustrating a structure of a network entity according to an embodiment of the disclosure.

As illustrated in FIG. 8, the network entity of the disclosure may include a processor 820, a transceiver 800, and a memory 810. However, components of the network entity are not limited to the above-described example. For example, the network entity may include a larger or smaller number of components than the above-described components. In addition, the processor 820, the transceiver 800, and the memory 810 may be implemented in the form of a single chip.

According to an embodiment of the disclosure, the processor 820 may control a series of processes so that the NF can operate according to the above-described embodiments of the disclosure. For example, the processor 820 may control the components of the network entity in order to perform the methods for providing broadcast services according to the above-described embodiments. The processor 820 may control the components of the network entity to perform the embodiments of the disclosure by executing the programs stored in the memory 810. In addition, the processor 820 may be an application processor (AP), a communication processor (CP), a circuit, an application-specific circuit, or at least one processor.

According to an embodiment of the disclosure, the transceiver 800 may transmit/receive signals with other network entities, base stations, or UEs. The signals transmitted/received with other network entities or UEs may include control information and data. The transceiver 800 may include an RF transmitter configured to up-convert and amplify the frequency of transmitted signals, an RF receiver configured to low-noise-amplify received signals and down-convert the frequency thereof, and the like. However, this is only an embodiment of the transceiver 800, and the components of the transceiver 800 are not limited to the RF transmitter and the RF receiver. In addition, the transceiver 800 may receive signals through a radio channel, output the same to the processor 820, and transmit signals output from the processor 820 through the radio channel.

According to an embodiment of the disclosure, the memory 810 may store programs and data necessary for operations of the network entity. In addition, the memory 810 may store control information or data included in signals transmitted/received by the network entity. The memory 810 may include storage media such as a ROM, a RAM, a hard disk, a CD-ROM, and a DVD, or a combination of storage media. In addition, the memory 810 may include multiple memories. Furthermore, according to an embodiment, the memory 810 may store programs for executing the above-described methods for providing broadcast services.

According to an embodiment of the disclosure, a method for providing a broadcast service by an MB-SMF may include assigning a TMGI to an AF to provide a broadcast service to be provided to a terminal, receiving an MBS session generation request corresponding to the TMGI, transmitting, to the AF, a context generation request message including the TMGI in response to the MBS session generation request, receiving N3mb downlink tunnel information from an NG-RAN through the AMF, and transmitting the N3mb downlink tunnel information to an MB-UPF.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented.

## Claims

1. A method performed by an access and mobility management function (AMF) entity in a wireless communication system, the method comprising:
acquiring information on a femto system associated with a local data network;
selecting a session management function (SMF) entity, based on the information on the femto system; and
transmitting, to the SMF entity, a first message including a request for establishing a PDU session associated with the local data network.

2. The method of claim 1, wherein the information on the femto system comprises at least one of an identifier of the femto system, a cell identifier regarding the femto system, an indicator indicating that the femto system is a femto system, and a network entity address of the femto system.

3. The method of claim 1, wherein the acquiring of the information on the femto system comprises receiving, from a base station associated with the femto system, a second message including the information on the femto system, and
wherein the second message further comprises the request for establishing the PDU session associated with the local data network.

4. The method of claim 1, wherein the SMF entity is either a local SMF entity associated with the femto system or an SMF entity associated with a macro system.

5. A method performed by a session management function (SMF) entity in a wireless communication system, the method comprising:
receiving, from an access and mobility management function (AMF) entity, a first message including a request for establishing a PDU session associated with a local data network; and
transmitting, to a local user plane function (UPF) entity associated with a femto system, a second message for establishing the PDU session.

6. The method of claim 5, wherein the SMF entity is either a local SMF entity associated with the femto system or an SMF entity associated with a macro system.

7. The method of claim 6, wherein, in case that the SMF entity is the SMF associated with the macro system, the first message further comprises information on the femto system, and
wherein the method further comprises identifying the local UPF entity, based on the information on the femto system.

8. The method of claim 7, wherein the information on the femto system comprises at least one of an identifier of the femto system, a cell identifier regarding the femto system, an indicator indicating that the femto system is a femto system, and a network entity address of the femto system.

9. An access and mobility management function (AMF) entity in a wireless communication system, comprising:
a transceiver; and
a controller coupled to the transceiver,
wherein the controller is configured to:
acquire information on a femto system associated with a local data network;
select a session management function (SMF) entity, based on the information on the femto system; and
transmit, to the SMF entity, a first message including a request for establishing a PDU session associated with the local data network.

10. The AMF entity of claim 9, wherein the information on the femto system comprises at least one of an identifier of the femto system, a cell identifier regarding the femto system, an indicator indicating that the femto system is a femto system, and a network entity address of the femto system.

11. The AMF entity of claim 9, wherein the acquiring of the information on the femto system comprises receiving, from a base station, a second message including the information on the femto system, and
wherein the second message further comprises the request for establishing the PDU session associated with the local data network.

12. The AMF entity of claim 9, wherein the SMF entity is either a local SMF entity associated with the femto system or an SMF entity associated with a macro system.

13. A session management function (SMF) entity in a wireless communication system, comprising:
a transceiver; and
a controller coupled to the transceiver,
wherein the controller is configured to:
receive, from an access and mobility management function (AMF) entity, a first message including a request for establishing a PDU session associated with a local data network; and
transmit, to a local user plane function (UPF) entity associated with a femto system, a second message for establishing the PDU session.

14. The SMF entity of claim 13, wherein the SMF entity is either a local SMF entity associated with the femto system or an SMF entity associated with a macro system.

15. The SMF entity of claim 13, wherein, in case that the SMF entity is an SMF associated with a macro system:
the first message further comprises information on the femto system, and
the controller is configured to identify the local UPF entity, based on the information on the femto system, and
wherein the information on the femto system comprises at least one of an identifier of the femto system, a cell identifier regarding the femto system, an indicator indicating that the femto system is a femto system, and a network entity address of the femto system.
